Europäisches Patentamt

European Patent Office

Office européen des brevets

(19)

(11) Veröffentlichungsnummer : **0 486 834 B1**

(12) # EUROPÄISCHE PATENTSCHRIFT

(45) Veröffentlichungstag der Patentschrift :
22.11.95 Patentblatt 95/47

(51) Int. Cl.⁶ : **H04J 13/00**

(21) Anmeldenummer : **91118102.2**

(22) Anmeldetag : **24.10.91**

(54) Mehrfachzugriffsverfahren und Mobilfunksystem zur Durchführung des Mehrfachzugriffsverfahrens.

(30) Priorität : **22.11.90 CH 3702/90**

(43) Veröffentlichungstag der Anmeldung :
**27.05.92 Patentblatt 92/22**

(45) Bekanntmachung des Hinweises auf die
Patenterteilung :
**22.11.95 Patentblatt 95/47**

(84) Benannte Vertragsstaaten :
**AT CH DE FR GB LI SE**

(56) Entgegenhaltungen :
**GLOBECOM '89: PROCEEDINGS IEEE GLO-
BAL TELECOMMUNICATIONS CONFERENCE
& EXHIBITION, Dallas, Texas, 27.-30. November 1989, Band 2, Seiten 1012-1016; W.C.
KWONG et al.: "Synchronous versus asynchronous CDMA for fiber-optic LANS using optical signal processing"**

(56) Entgegenhaltungen :
**APPLIED OPTICS, Band 9, Nr. 12, Dezember
1970, Seiten 2658-2660, New York, US; TH. DE
GRAAUW et al.: "Pseudo-random binary sequences for multiplex codes"
PROCEEDINGS IEEE INFOCOM '86, Miami,
Florida, 8. - 10. April 1986, Seiten 415-423; Y.
BIRK et al.: "Code-assignment policies for
multi-receiver nodes in CDMA packet radio
networks"**

(73) Patentinhaber : **ASCOM TECH AG
Berner Technopark,
Morgenstrasse 129
CH-3018 Bern (CH)**

(72) Erfinder : **Massey, James L.
Obere Waidstrasse 17
8037 Zürich (CH)**

(74) Vertreter : **Keller, René, Dr. et al
Keller & Partner
Patentanwälte AG
Marktgasse 31
Postfach
CH-3000 Bern 7 (CH)**

EP 0 486 834 B1

EP 0 486 834 B1

## Beschreibung

## Technisches Gebiet

Die Erfindung betrifft ein Mehrfachzugriffsverfahren zum gleichzeitigen Austauschen von mehreren Datenströmen zwischen mehreren Teilnehmern eines Uebertragungssystems, wobei verschiedene Datenströme mit der gleichen Spreizsequenz zu einem entsprechenden DSSS-Signal gespreizt werden und die verschiedenen DSSS-Signale bei der Uebertragung zu einem einzigen Empfangssignal überlagert werden.

## Stand der Technik

In der Mobilfunktechnik werden praktisch immer mehrere Benützer gleichzeitig von einer einzigen Basisstation bedient. Die Signale verschiedener Teilnehmer sollten bei einem solchen System idealerweise orthogonal sein. D.h. dass der Empfänger der Mobilstation resp. der Basisstation das von der Basisstation resp. der Mobilstation für ihn bestimmte Signal so herausfiltern kann, dass keinerlei Signalanteile von anderen Benützern mehr vorhanden sind.

Neben den gebräuchlichen Zeit- und Frequenzmultiplexverfahren kann zu diesem Zweck auch die DSSS-CDMA-Technik (DSSS = Direct Sequence Spread Spectrum, CDMA = Code Division Multiple Access) eingesetzt werden.

Bei TDMA-Systemen (TDMA = Time Division Multiple Access) wird die Zeitachse in Schlitze einer gegebenen Länge T aufgeteilt. Einem Benutzer wird sodann in einem bestimmten Zeitrahmen aus K Schlitzen stets der k-te so zugeteilt, dass nie zwei Benutzer im gleichen Schlitz senden.

Der Hauptvorteil von TDMA-Systemen besteht darin, dass es im wesentlichen keine Interferenz zwischen verschiedenen Benutzern gibt. Der Preis, der dafür zu bezahlen ist, ist die hohe Präzision der Synchronisation der K Benutzer. Ein zweiter signifikanter Nachteil stellt die hohe Spitzenleistung dar: Jeder Sender muss als Spitzenleistung (peak power) das K-fache seiner Durchschnittsleistung erbringen können. Schliesslich ist das System ziemlich unflexibel: Es werden spezielle Protokolle benötigt, um neuen Benützern Zeitschlitze (sog. Slots) zuweisen zu können, und zwar selbst wenn die Slots schwach besetzt sind, d.h. wenn nur ein kleiner Teil der maximal zugelassenen Teilnehmer aktiv ist.

Bei DSSS-CDMA-Systemen wird jedes Symbol des Datenstroms mit einer vorgegebenen Spreizsequenz multipliziert und übertragen. Im binären Fall bestimmt jedes Datenbit die Polarität einer ganzen Pulssequenz aus L "Chips". Ein Chip kann dabei den Wert +1 oder -1 annehmen. Damit die einzelnen Benützer getrennt werden können, wird jedem eine eigene Spreizsequenz zugeordnet. Im Empfänger wird das übertragene Signal von einer Filterbank mit K Matched Filtern verarbeitet. Jedes der K Filter ist an die Spreizsequenz eines der Benutzer angepasst. Für ein optimales System sind die Sequenzen so festzulegen, dass die Kreuzkorrelation zwischen verschiedenen Spreizsequenzen und damit auch die Interferenz zwischen den verschiedenen Datenströmen möglichst klein wird.

Eine Analyse eines DSSS-CDMA-Systems beinhaltet der Artikel "Performance Evaluation for Phase-Coded Spread-Spectrum Multiple-Access Communication - Part I + II", Michael B. Pursley, IEEE Trans. on Communications, Vol. COM-25, Nr. 8, August 1977, pp. 795-803.

Der Hauptvorteil der CDMA-Systeme liegt darin, dass es nicht mehr nötig ist, zwischen den Teilnehmern eine genaue Synchronisation aufrechtzuerhalten. In der Tat werden solche Systeme in der Regel völlig asynchron betrieben. Ein weiterer Vorteil ergibt sich daraus, dass die Sender kontinuierlich senden. D.h. die Spitzenleistung fällt im wesentlichen mit der Durchschnittsleistung zusammen.

Der wesentliche Nachteil ist darin zu sehen, dass die Interferenz von anderen Benutzern her insgesamt nicht vernachlässigt werden kann. Diese Interferenz ist insbesondere dann ausgeprägt, wenn die Benützer mit stark unterschiedlichen Feldstärken empfangen werden ("Near-Far-Effect"). Aus diesem Grund wird oft die Sendeleitung der Benützer geregelt.

Ueblicherweise begrenzt diese Interferenz und nicht das thermische Rauschen die maximale Anzahl der Benutzer. Aus schaltungstechnischer Sicht ist es schliesslich nachteilig, dass im Empfänger soviele Matched Filter benötigt werden, wie Benützer vorhanden sind. Nicht selten ist dies der Grund, weshalb bei der Realisierung von Mobilfunksystemen zuungunsten von CDMA entschieden wird.

In der Veröffentlichung "Development of the ALOHANET", N. Abramson, IEEE Trans. on Information Theory, Vol. II-31, No. 2, March 1985, wird ein sog. "Spread Aloha" Verfahren vorgeschlagen. Dabei wird im Aloha Kanal eine zeitliche Spreizung eingefügt, d.h. jedes Datenpaket wird den Chips einer binären Sequenz entsprechend gewichtet und mehrmals übertragen. Im Empfänger wird der zeitlich gespreizte Datenstrom durch Matched Filterung wieder annähernd auf die Dauer eines Datenpakets komprimiert.

Durch die zeitliche Spreizung kann also das Verhältnis von Spitzenleistung zu Durchschnittsleistung wie

2

bei CDMA klein gehalten werden, wobei jedoch die guten Eigenschaften des Aloha-Prinzips bezüglich Verhinderung von Paket-Kollisionen im Zeitbereich (sog. "collision resolution") nicht stark verschlechtert werden. Ein Nachteil des Verfahrens besteht darin, dass die Spreizung durch die Matched Filterung nicht vollständig rückgängig gemacht werden kann.

## Darstellung der Erfindung

Aufgabe der Erfindung ist es, ein Mehrfachzugriffsverfahren der eingangs genannten Art zu schaffen, das die beim Stand der Technik vorhandenen Probleme vermeidet. Insbesondere ist es Ziel der Erfindung, ein System vorzuschlagen, das einer grossen Zahl von Teilnehmern ermöglicht, das gleiche Frequenzspektrum in einer sowohl gegenüber TDMA als auch DSSS-CDMA vorteilhaften Weise zu teilen.

Erfindungsgemäss besteht die Lösung darin, dass zum Detektieren der verschiedenen Datenströme in einem Empfänger das Empfangssignal in einem bezüglich der gemeinsamen Spreizsequenz inversen Filter gefiltert wird und dass die Ueberlagerung so erfolgt, dass die zu verschiedenen Datenströmen gehörenden Spreizsequenzintervalle um einen vorgegebenen minimalen Wert zeitlich gegeneinander verschoben sind.

Der Kern des erfindungsgemässen Verfahrens besteht in der Verwendung eines Inversfilters anstelle eines Matched Filters. Dies ermöglicht die Realisierung eines Mehrfachzugriffssystems, das die sog. Inter-user Interferenz vermeidet, ohne eine präzise Synchronisation zu erfordern.

Gemäss einer vorteilhaften Ausführungsform ist die zeitliche Verschiebung der zu verschiedenen Datenströmen gehörenden Spreizsequenzintervalle grösser ist als die Dauer eines Chips plus die Dauer der Stossantwort eines für die Uebertragung des entsprechenden DSSS-Signals verwendeten Kanals. Dadurch lassen sich die einzelnen Benutzer klar voneinander trennen. Ausserdem ist es damit möglich die Kanalstossantwort für jeden Uebertragungskanal im Detektor zu schätzen.

In diesem Zusammenhang wird auf die zeitgleiche Anmeldung mit der Veröffentlichungsnummer EP-A-0 486 833 verwiesen, in welcher InversfilterEmpfänger beschreiben sind.

In einem System mit vielen Benutzern wird das Protokoll besonders einfach, wenn die zeitliche Verschiebung gegenüber benachbarten Spreizsequenzintervallen für alle zu verschiedenen Datenströmen gehörenden Spreizsequenzintervalle ungefähr gleich gross ist.

Das Inversfilter ist ein zeitdiskretes Filter, welches auf die vorgegebene Spreizsequenz als solche mit einer Kronecker-Delta-Sequenz antwortet.

Vorzugsweise gehorchen die Koeffizienten $v[k]$ des zur Spreizsequenz $s[.]$ gehörenden inversen Filters folgender Beziehung:

$$v[k] = \frac{1}{2\pi} \int_{-\pi}^{\pi} \frac{d\Omega}{\sum\limits_{i=0}^{L-1} s[i] e^{j(i-k)\Omega}} \quad ,$$

$$k = -M_1 \ldots L+M_2,$$
$$v[k] = 0, \text{ für } k < -M_1 \text{ und } k > L+M_2.$$

Weitere bevorzugte Approximationen beziehen sich auf die Annäherung der Kronecker-Delta-Sequenz im Sinn der kleinsten Fehlerquadrate oder eines maximalen POP-Verhältnisses.

Eine optimale oder zumindest relativ optimale Spreizsequenz $s[.]$ ist so festgelegt, dass der Prozessgewinn G, definiert durch die Inverse der Energie des zugehörigen Inversfilters:

$$G = \frac{1}{\sum\limits_{i=-\infty}^{+\infty} v[i]^2}$$

in bezug auf alle oder möglichst viele Spreizsequenzen gegebener Länge L maximal ist.

Eine Möglichkeit um sicherzustellen, dass die minimalen zeitlichen Abstände eingehalten werden, besteht darin, über einen separaten Kanal Synchronisationssignale an die Teilnehmer des Uebertragungssystems zu übertragen.

Das erfindungsgemässe Verfahren eignet sich gut für Mobilfunksysteme. Ein Beispiel stellt der mikrozel-

3

lulare Mobilfunk dar, wo sich die mobilen Teilnehmerstationen in einem Umkreis von typischerweise mehreren Metern bis maximal etwa 100 Metern einer Basisstation bewegen.

Aus der Gesamtheit der abhängigen Patentansprüche ergeben sich weitere vorteilhafte Ausführungsformen.

## Kurze Beschreibung der Zeichnungen

Nachfolgend soll die Erfindung anhand von Ausführungsbeispielen und im Zusammenhang mit den Zeichnungen näher erläutert werden. Es zeigen:

Fig. 1        eine Darstellung der Synchronisation verschiedener Datenströme;
Fig. 2        eine schematische Darstellung des mit dem Inversfilter gefilterten Empfangssignals; und
Fig. 3a,b    ein Blockschaltbild eines erfindungsgemässen Mobilfunksystems.

Die in den Zeichnungen verwendeten Bezugszeichen und deren Bedeutung sind in der Bezeichnungsliste zusammenfassend aufgelistet. Grundsätzlich sind in den Figuren gleiche Teile mit gleichen Bezugszeichen versehen.

## Wege zur Ausführung der Erfindung

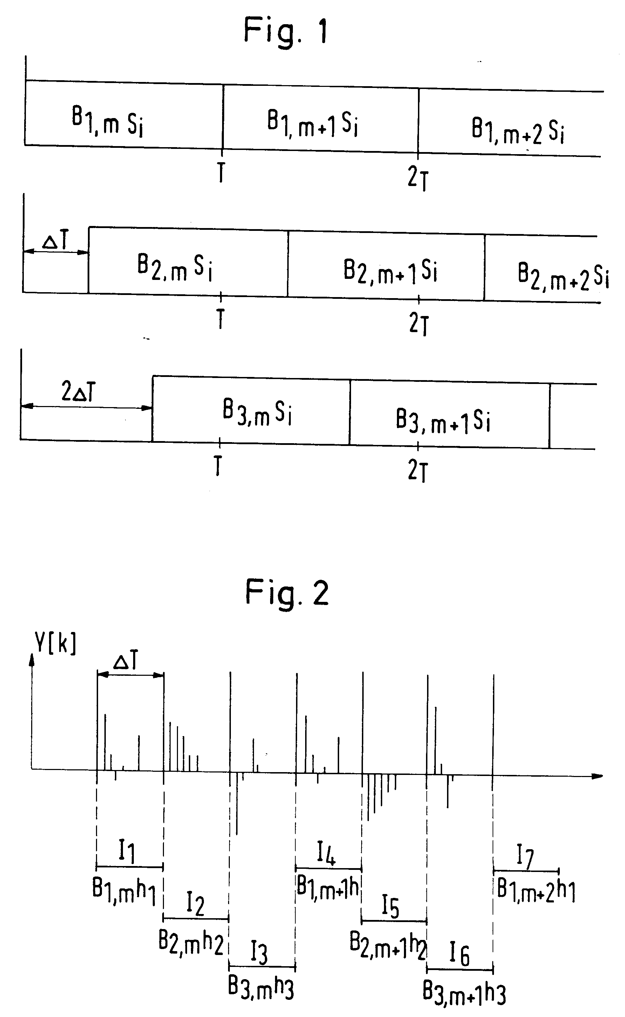

Fig. 1 veranschaulicht das Prinzip der Erfindung. Das Ziel des erfindungsgemässen Verfahrens besteht darin, mehrere separate Datenströme $\{B_{1,m}\}$, $\{B_{2,m}\}$, $\{B_{3,m}\}$, m = 0, 1, 2, ..., gleichzeitig zu übertragen. Die Uebertragung soll dabei im gleichen HF-Bereich erfolgen. Typischerweise werden also mehrere Sender ihre Datenströme einer Trägerschwingung aufmodulieren, deren Frequenz für alle die selbe ist.

Die Datenströme $\{B_{1,m}\}$, $\{B_{2,m}\}$, $\{B_{3,m}\}$ beinhalten digitale (z.B. binäre) Daten in Form von Symbolen $B_{1,m}$, $B_{2,m}$, $B_{3,m}$, welche im jeweiligen Datenstrom mit einer vorgegebenen Symboldauer T auftreten. Die einzelnen Datenströme $\{B_{1,m}\}$, $\{B_{2,m}\}$, $\{B_{3,m}\}$ werden in an sich bekannter Weise gespreizt: Jedes Symbol $B_{1,m}$, $B_{1,m+1}$, $B_{1,m+2}$, wird mit einer fest vorgegebenen, aperiodischen Spreizsequenz s[i], i = 0..L, der Länge L multipliziert. Die Spreizsequenz besteht also aus L "Chips" mit einer Chipdauer $T_C$ = T/L. Das Resultat dieses Uebergangs von T auf T/L ist ein DSSS-Signal $\{B_{1,m}s[.]\}$.

Jeder Datenstrom $\{B_{1,m}\}$, $\{B_{2,m}\}$, $\{B_{3,m}\}$ wird auf die beschriebene Weise zu einem entsprechenden DSSS-Signal $(B_{1,m}s[.]\}$, $\{B_{2,m}s[.]\}$, $\{B_{3,m}s[.]\}$ verarbeitet. Die verschiedenen DSSS-Signale $\{B_{1,m}s[.]\}$, $\{B_{2,m}s[.]\}$, $\{B_{3,m}s[.]\}$ werden sodann zeitlich gegeneinander verschoben und zwar so, dass nie zwei zu verschiedenen Datenströmen gehörende Spreizintervalle zusammenfallen. Im vorliegenden Beispiel dürfen also die Spreizintervalle $[B_{1,m}]$, $[B_{2,m}]$ und $[B_{3,m}]$, welche alle von der Länge T sind, nie zum gleichen Zeitpunkt beginnen. Vielmehr müssen sie einen minimalen gegenseitigen zeitlichen Abstand Delta_T wahren. (Delta_T ist offensichtlich kleiner als die Länge T eines Zeitschlitzes.) Gemäss der in der Fig. 1 gezeigten Ausführungsform ist der zeitliche Abstand Delta_T für alle gleich gross (z.B. Delta_T = T/K; K = Anzahl Benützer). Das zweite DSSS-Signal $\{B_{2,m}s[.]\}$ weist also eine Verschiebung Delta_T gegenüber dem ersten DSSS-Signal $\{B_{1,m}s[.]\}$ auf. Das dritte DSSS-Signal $\{B_{3,m}s[.]\}$ ist um Delta_T gegenüber dem zweiten $\{B_{2,m}s[.]\}$ und um 2 Delta_T gegenüber dem ersten verzögert $\{B_{1,m}s[.]\}$.

Bei der Uebertragung überlagern sich die zu verschiedenen Datenströmen gehörenden DSSS-Signale $\{B_{1,m}s[.]\}$, $\{B_{2,m}s[.]\}$, $\{B_{3,m}s[.]\}$. Ein Empfänger, der an einen bestimmten der Datenströme interessiert ist, muss diesen also zuerst aus dem Empfangssignal herausfiltern. Gemäss der Erfindung geschieht dies mit einem approximierten Inversfilter. Beim angestrebten idealen Inversfilter handelt es sich um ein bezüglich der Spreizsequenz inverses Filter. Dieses hat die Eigenschaft, dass es auf die vorgegebene Spreizsequenz als solche mit einer reinen Kronecker-Delta-Sequenz $\delta[k]$ antwortet. Dies soll im folgenden näher erläutert werden.

Der Empfänger unterscheidet sich von einem bekannten DSSS-Empfänger also durch die Verwendung eines approximierten Inversfilters, anstelle eines Matched Filters.

Das Matched Filter, dessen Koeffizienten v[k] also gegeben wären gemäss v[k] = s[-i]*, ermittelt im wesentlichen eine Korrelationsfunktion der Spreizsequenz. Diese hat ein Maximum bei relativer zeitlicher Verschiebung um Null Abtastwerte. Um das Maximum gruppieren sich mehrere Nebenspitzen. Für Verschiebungen grösser als L Abtastwerte verschwindet die Korrelationsfunktion, da die Spreizsequenz selbst die endliche Länge L hat.

Das Inversfilter hat eine ganz andere Wirkung. Seine Antwort auf die Spreizsequenz als solche produziert eine Kronecker-Delta-Sequenz. Eine solche Sequenz zeichnet sich bekanntlich dadurch aus, dass sie nur einen von Null verschiedenen Abtastwert hat.

In der Praxis lässt sich eine reine Kronecker-Delta-Sequenz nur näherungsweise realisieren, da sonst das Inversfilter unendlich viele Filterkoeffizienten v[k] aufweisen müsste.

Deshalb wird die Impulsantwort des Filters auf eine Länge $-M_1 \leqq k \leqq L+M_2$ begrenzt. Ausserhalb dieses

Fensters sind die Filterkoeffizienten v[k] identisch Null. Die von Null verschiedenen Filterkoeffizienten v[k] werden gemäss der Erfindung so gewählt, dass bei Anregung des Filters durch die Spreizsequenz das resultierende Ausgangssignal die Kronecker-Delta-Sequenz möglichst gut annähert.

Wie aus der weiter oben zitierten, zeitgleichen Anmeldung EP-A-0 486 833 von F. Neeser et al. hervorgeht, gibt es für die Approximation drei bevorzugte Ausführungsformen:

1. Abschneiden des idealen Filters (Truncation).
2. Least Square-Approximation der Kronecker-Delta-Sequenz.
3. Maximales Peak/Off Peak-Verhältnis

Weil die Koeffizienten v[k] des idealen Inversfilters im Fall einer geeignet ausgewählten Spreizsequenz für grosse k exponentiell zerfallen, lassen sich auch mit Filtern vernünftiger Länge schon ziemlich gute Resultate erreichen. Gemäss einer vorteilhaften Ausführungsform gehorchen die Koeffizienten v[k] des Inversfilters folgender Beziehung:

$$ v[k] \;=\; \frac{1}{2\pi} \int_{-\pi}^{\pi} \frac{d\Omega}{\displaystyle\sum_{i=0}^{L-1} s[i]\, e^{j(i-k)\Omega}} \quad , $$

$k = -M_1 \ldots L+M_2,$

$v[k] = 0$, für $k < -M_1$ und $k > L+M_2$.

Für $-M_1 \leq k \leq L + M_2$ entsprechen die Filterkoeffizienten dem idealen Fall, ausserhalb des genannten Bereiches sind sie einfach auf Null gesetzt. Das approximierte Inversfilter entspricht somit dem abgeschnittenen idealen Inversfilter ($M_1$ und $M_2$ sind vorgebbare Zahlen, d.h. sog. Designparameter).

Ein derart ausgelegtes Filter ist als solches aus der Veröffentlichung von Jürg Ruprecht "Maximum-Likelihood Estimation of Multipath Channels", Diss. ETH Nr. 8789, Zürich 1989, Hartung-Gorre Verlag, bekannt. Dort ist auch gezeigt worden, dass die Koeffizienten für grosse k exponentiell zerfallen und infolgedessen die Truncation durchaus gute Resultate liefert.

Bei der Least Square-Approximation antwortet das approximierte Inversfilter bei Anregung durch die vorgegebene Spreizsequenz s[.] als solche mit einer Ausgangssequenz, die die Kronecker-Delta-Sequenz im Sinn der kleinsten Fehlerquadrate annähert.

Bei der dritten Approximation hat die Ausgangssequenz im genannten Fall ein maximales Peak/Off Peak-Verhältnis. D.h. der grösste Nebenpeak wird im Verhältnis zum Hauptpeak so klein wie möglich gemacht. Es handelt sich hier um eine angenäherte Realisierung des unendlich grossen Peak/Off Peak-Verhältnisses einer Kronecker-Delta-Sequenz.

Eine wichtige Eigenschaft des Inversfilters liegt ausserdem darin, dass die Nebenspitzen, die mathematisch mit dem sog. Peak/off Peak-Verhältnis (POP ratio) quantitativ erfasst werden können, bei geeigneter Wahl der Spreizsequenz sehr klein gehalten werden können gegenüber dem Hauptimpuls. Es empfiehlt sich deshalb aus den Spreizsequenzen gegebener Länge diejenige mit dem grössten POP-Verhältnis zu wählen.

Wenn nun nicht die Spreizsequenz als solche, sondern das Empfangssignal mit einem Inversfilter gefiltert wird, dann hat dies zur Folge, dass ein Signal entsteht, das in periodisch wiederkehrende Zeitschlitze aufgeteilt werden kann, wobei jeder Zeitschlitz die Information über ein Symbol beinhaltet. Die Länge eines Zeitschlitzes entspricht der zeitlichen Verschiebung der verschiedenen entsprechenden DSSS-Signale $\{B_{1,m}s[.]\}$, $\{B_{2,m}s[.]\}$, $\{B_{3,m}s[.]\}$ in den Sendern. Um einen bestimmten Datenstrom zu detektieren, müssen also nur die entsprechenden Zeitschlitze ausgewertet werden.

Fig. 2 zeigt beispielhaft einen Signalverlauf Y[k] am Ausgang des Inversfilters. Mit $I_1 , \ldots, I_6$ sind die Zeitschlitze bezeichnet. Sie sind im vorliegenden Fall von der Länge Delta_T (vgl. Fig. 1). Die um ein Zeitintervall T (Symboldauer) voneinander beabstandeten Zeitschlitze gehören jeweils zum selben Datenstrom. Bei K (hier K = 3) verschiedenen Datenströmen beinhalten also die jeweils K-ten (hier 3-ten) Zeitschlitze $I_1$, $I_4$, ..., resp. $I_2$, $I_5$, ..., resp. $I_3$, $I_6$, ..., die Information ein und desselben Datenstroms.

Bevor die Weiterverarbeitung des Signals aus einander entsprechenden Zeitschlitzen beschrieben wird, ist etwas über die Signalübertragung vorauszuschicken.

In einem Mobilfunksystem beispielsweise stammen die verschiedenen Datenströme von verschiedenen Teilnehmern. Bei der Uebertragung der DSSS-Signale von den mobilen Stationen zur Basisstation werden die Signale entsprechend dem zugehörigen Kanal $h_k(t)$, k = 1..K, verformt. In der Regel werden also die verschiedenen DSSS-Signale unterschiedlich verändert.

Oben wurde erläutert, dass die Systemantwort des Inversfilters auf die Spreizsequenz als solche im wesentlichen eine Kronecker-Delta-Sequenz ist. Ein unverformtes DSSS-Signal produziert am genannten Filterausgang eine Folge von Pulsen. Die Pulse haben einen zeitlichen Abstand T (Symboldauer) und sind entsprechend dem jeweiligen Symbolwert des Datenstroms gewichtet.

Die Verformung des DSSS-Signals durch den Kanal hat nun zur Folge, dass am Ausgang des Inversfilters anstelle gewichteter Pulse die mit einem Symbolwert multiplizierte (äquivalente zeitdiskrete) Uebertragungsfunktion $h_k[.]$ des Kanals $h_k(t)$ entsteht.

Das in Fig. 2 gezeigte Ausgangssignal Y[k] setzt sich also im Prinzip zusammen aus gewichteten Kanalstossantworten. Im Zeitschlitz $I_1$ hat Y[k] also im wesentlichen (d.h. abgesehen von Rauschanteilen) den Verlauf $B_{1,m}h_1$, wobei $B_{1,m}$ den Symbolwert und $h_1$ die Kanalstossantwort des Kanals zwischen erstem Benutzer und dem Empfänger bezeichnen. Im Zeitschlitz $I_4$, der ebenfalls dem ersten Datenstrom zuzuordnen ist, entspricht das Ausgangssignal sinngemäss der mit dem nächsten Symbolwert des Datenstroms multiplizierten Kanalstossantwort: $B_{1,m+1}h_1$. Analoges gilt für die übrigen Zeitschlitze $I_2$, $I_5$, ..., resp. $I_3$, $I_6$, ...

Das in Fig. 2 gezeigte Beispiel bezieht sich auf den binären Fall $B_{k,m}$ = +/-1. Da in den Zeitschlitzen $I_1$ und $I_4$ die Polarität des Ausgangssignals Y[k] positiv ist, betragen die entsprechenden Symbolwerte: $B_{1,m}$ = +1, $B_{1,m+1}$ = +1. Aus analogen Ueberlegungen ergibt sich: $B_{2,m}$ = +1, $B_{2,m+1}$ = -1, $B_{3,m}$ = -1, $B_{3,m+1}$ = +1.

Zum Detektieren der Daten extrahiert also der Empfänger alle zusammengehörenden Zeitschlitze (d.h. für den k-ten Datenstrom jeweils die k-ten Zeitschlitze eines Rahmens aus K Zeitschlitzen), filtert dieses extrahierte Signal mit einem kanalangepassten Matched Filter (dessen Stossantwort bekanntlich h∗[-.] ist), extrahiert den Realteil des resultierenden Signals und führt eine Schwellwertdetektion durch. Auf diese Weise werden die Symbole nach dem ML-Prinzip (ML = Maximum Likelihood) geschätzt.

Die Einzelheiten zum ML-Detektor sind in der bereits erwähnten Anmeldung der Erfinder F. Neeser et al. zu entnehmen. Insbesondere ist dort auch ein Verfahren zum Schätzen der Koeffizienten des kanalangepassten Matched Filters h∗[-.] beschrieben, das auch bei der vorliegenden Erfindung eingesetzt werden kann.

Gemäss einer vorteilhaften Ausführungsform ist die zeitliche Verschiebung Delta_T der zu verschiedenen Datenströmen gehörenden Spreizsequenzintervalle grösser ist als die Dauer der Stossantwort eines für die Uebertragung des entsprechenden DSSS-Signals verwendeten Kanals. Dadurch lassen sich die einzelnen Benutzer klar voneinander trennen, weil die zu verschiedenen Datenströmen gehörenden Signalanteile im Empfangssignal sich in keiner Weise überlagern. Ausserdem ist es damit möglich, gemäss einer vorteilhaften Ausführungsform die Kanalstossantwort für jeden Uebertragungskanal mit dem Detektor zu schätzen.

Um möglichst viele Datenströme gleichzeitig übertragen zu können, d.h. um ein Uebertragungssystem mit möglichst grosser Kapazität realisieren zu können, ist es nötig, die zeitliche Verschiebung der DSSS-Signale so klein wie möglich zu halten.

Die zeitliche Verschiebung sollte jedoch einen vorgegebenen minimalen Wert nicht unterschreiten, sonst kann das Empfangssignal nicht mehr entmultiplext werden. Diese untere Grenze entspricht vorzugsweise der längsten auftretenden Kanalstossantwort plus einer Chipdauer und ist für alle DSSS-Signale im wesentlichen die selbe.

Am einfachsten ist es, wenn die zeitliche Verschiebung Delta_T ein für alle Mal festgelegt wird (z.B. bei der Implementation des Systems). Es besteht aber durchaus auch die Möglichkeit, sie den konkreten Umständen der Uebertragungskanäle anzupassen.

Der Vorteil der Erfindung besteht darin, dass keine exakte Synchronisation erforderlich ist. In einem begrenzten Rahmen ist es deshalb durchaus denkbar, das erfindungsgemässe Mehrfachzugriffsverfahren im Sinn eines Aloha oder Slotted Aloha Verfahrens ("random access") weiterzubilden.

Eine bevorzugte Alternative besteht darin, bei der Implementation neben dem gemeinsamen Datenkanal einen separaten Synchronisationskanal vorzusehen. Auf diesem Synchronisationskanal werden (z.B. durch die Basisstation) Synchronisationssignale für die Einhaltung der minimalen zeitlichen Abstände an die Teilnehmer des Uebertragungssystems abgegeben. Solche Zusatzkanäle werden z.B. auch bei TDMA-Systemen verwendet.

Ein Freiheitsgrad, auf den bis jetzt noch nicht eingegangen worden ist, der aber für die Qualität des Uebertragungssystems durchaus von Bedeutung sein kann, ist die konkrete Wahl der Spreizsequenz. Gemäss einer vorteilhaften Ausführungsform der Erfindung ist die Spreizsequenz s[.] so festgelegt, dass der Prozessgewinn G, definiert durch die Inverse der Energie des zugehörigen Inversfilters:

$$G = \frac{1}{\displaystyle\sum_{i=-\infty}^{+\infty} v_i^2}$$

in bezug auf möglichst viele, insbesondere alle Spreizsequenzen gleicher Länge maximal ist.

Bei kleinen Sequenzlängen L ist es möglich, alle möglichen Pulskombinationen einer bestimmten Länge systematisch auf den Prozessgewinn zu prüfen und dann die optimale Spreizsequenz auszuwählen. Bei grossen Längen (z.B. L = 100) ist dies bis jetzt aus Gründen der benötigten extrem grossen Rechenzeit noch nicht möglich, da schnelle systematische Suchalgorithmen fehlen. In der Praxis hilft man sich dann so, dass man eine beschränkte Klasse von Sequenzen mit tendenziell guten Eigenschaften auswählt und die Optimierung nur innerhalb dieser Klasse durchführt. Es handelt sich dann nur um eine relative Optimierung.

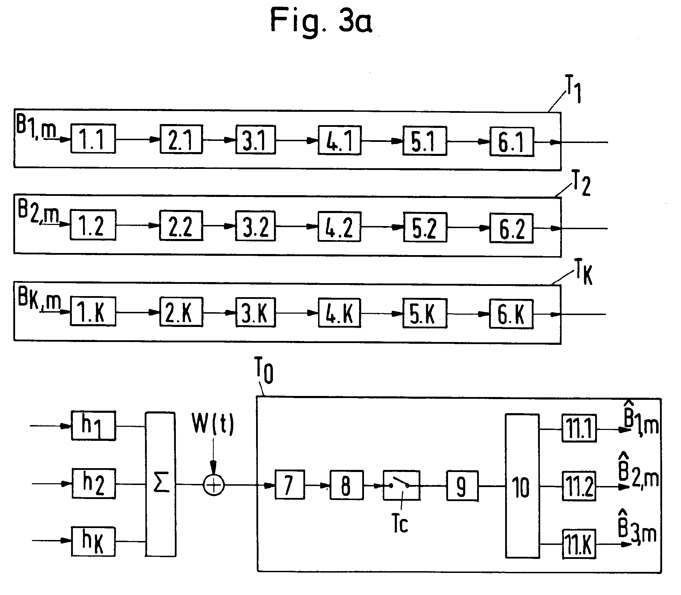

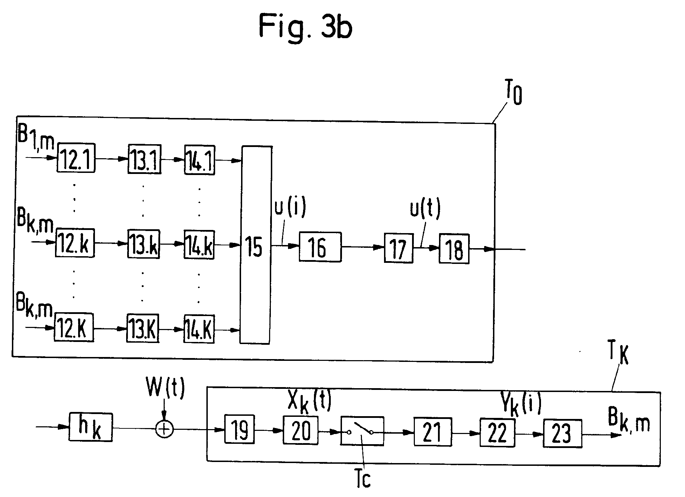

Fig. 3a,b zeigt ein Blockschaltbild eines erfindungsgemässen Mobilfunksystems. Es umfasst eine Basisstation $T_0$ und K mobile Teilnehmerstationen $T_1$, ..., $T_K$. Alle Stationen sind sowohl mit einem Sender- als auch mit einem Empfängerschaltkreis ausgestattet, um Zweiwegkommunikation zu ermöglichen. In Fig. 3a sind die Sender der Teilnehmerstationen $T_1$, ..., $T_K$ und der Empfänger der Basisstation $T_0$ und in Fig. 3b die Empfänger der Teilnehmerstationen $T_1$, ..., $T_K$ und der Sender der Basisstation $T_0$ gezeigt.

Der Sender der K-ten Teilnehmerstation $T_K$ beispielsweise umfasst einen Expander 1.K, der den Datenstrom $\{B_{K,m}\}$ zeitlich spreizt, indem vom Symbolintervall T auf das Chipintervall $T_C$ = T/L übergegangen wird (L = Anzahl Chips in der Spreizsequenz). Ein Verzögerungsglied 2.K bringt die erforderliche zeitliche Verschiebung $(K-1)T_C$ gegenüber den anderen Teilnehmern in den Datenstrom. Im Spreizsequenzgenerator 3.K wird die vorgegebene gemeinsame Spreizsequenz s[.] mit dem jeweils anliegenden Symbolwert multipliziert. Auf diese Weise wird das digitale DSSS-Signal erzeugt. Mit einem Impulsmodulator 4.K und einem Tiefpassfilter 5.K wird ein zeitkontinuierliches DSSS-Signal erzeugt, welches dann in einem konventionellen Modulator 6.K in an sich bekannter Weise einer Trägerschwingung aufmoduliert wird.

Die einzelnen Teilnehmerstationen $T_1$,..., $T_K$ sind im Prinzip alle gleich. Im Betrieb unterscheiden sie sich nur durch den Delay, mit dem sie ihren Datenstrom versehen.

Bei der Uebertragung werden die Signale durch den jeweiligen Kanal $h_1$, $h_2$, ..., $h_K$ deformiert und verrauscht (additives weisses Gauss'sches Rauschen W(t)). Im Empfänger überlagern sich die Signale der verschiedenen Teilnehmerstationen ($\Sigma$).

Der Empfänger der Basisstation $T_0$ demoduliert die Trägerschwingung (Demodulator 7), filtert den relevanten Frequenzbereich heraus (Filter 8) und tastet das gefilterte Signal mit der Chiprate $1/T_C$ ab.

Gemäss einem wesentlichen Merkmal der Erfindung wird das Empfangssignal X[i] mit einem Inversfilter 9 gefiltert. Dadurch erhält man ein Ausgangssignal Y[k] mit den anhand von Fig. 2 erläuterten Eigenschaften.

Eine Selektionsschaltung 10 extrahiert die zum selben Datenstrom gehörenden Zeitschlitze. Für jeden Datenstrom schliesst sich dann ein ML-Detektor 11.1, ..., 11.K an.

Fig. 3b veranschaulicht die umgekehrte Richtung der Datenübertragung. Die Basisstation $T_0$ verarbeitet parallel K Datenströme $\{B_{k,m}\}$, k = 1..K. Jeder wird gespreizt (Expander 12.1...12.K) und in einem Verzögerungsglied 13.k, k = 1..K, auf geeignete Weise mit einer zeitlichen Verschiebung (k-1)Delta_T, k = 1..K, versehen. Die verzögerten Signale werden in Spreizsequenzgeneratoren 14.1...14.K zu DSSS-Signalen verarbeitet. Eine Summierschaltung 15 überlagert die K DSSS-Signale zu einem digitalen Uebertragungssignal U(i). Dieses wird in an sich bekannter Weise mit einem Impulsmodulator 16 und einem Tiefpassfilter 17 zu einem zeitkontinuierlichen Signal U(t) verarbeitet. Ein Modulator 18 moduliert eine vorgegebene Trägerschwingung entsprechend dem zeitkontinuierlichen Signal U(t).

Bei der Uebertragung zur k-ten Teilnehmerstation $T_k$ erfährt die modulierte Trägerschwingung eine Verformumg im Kanal $h_k$ und eine Beeinträchtigung durch ein additives weisses Gauss'sches Rauschen W(t).

Die Teilnehmerstation $T_k$ demoduliert die Trägerschwingung und filtert den gewünschten Frequenzbereich heraus (Demodulator 19, Filter 20). Das resultierende Empfangssignal $X_k(t)$ wird mit einem ganzzahligen Vielfachen der Chiprate $1/T_C$ abgetastet und dann mit dem Inversfilter 21 gefiltert. Das abgetastete Empfangssignal wird dadurch entspreizt. Eine Selektionsschaltung 22 extrahiert entsprechend dem erfindungsgemässen Verfahren die der Teilnehmerstation $T_k$ zugewiesenen Zeitschlitze (z.B. immer den k-ten aus einem Rahmen von K Zeitschlitzen). Auf diese Weise wird ein Signal $Y_k$ gewonnen, aus welchem der Datenstrom ($B_{k,m}$ mit einem Dach gekennzeichnet) mit einem ML-Detektor 23 geschätzt werden kann.

Die Einzelheiten zum ML-Detektor 23 können der bereits mehrfach erwähnten zeitgleichen Anmeldung EP-A-0 486 833 (F. Neeser et al.) entnommen werden.

Während die Ueberlagerung bei der Uebertragung in Richtung Basisstation "automatisch" erfolgt (die von den verschiedenen Teilnehmern kommenden Signale überlagern sich physikalisch), so geschieht dies in umgekehrter Richtung "aktiv" d.h. auf elektronischer resp. schaltungstechnischer Ebene (Summierschaltung 15).

Die im Zusammenhang mit dem erfindungsgemässen Verfahren beschriebenen verschiedenen Ausführungsformen können im Lichte der Beschreibung ohne weiteres schaltungstechnisch implementiert werden.

Abschliessend kann festgehalten werden, dass die Erfindung ein Mehrfachzugriffsverfahren schafft, das die Vorteile von TDMA und CDMA auf sich vereinigt. Insbesondere ist eine praktisch totale Trennung der Benutzer möglich, ohne dass die bei TDMA übliche Präzision der Synchronisation nötig wäre.

**Patentansprüche**

1. Mehrfachzugriffsverfahren zum gleichzeitigen Austauschen von mehreren Datenströmen ($\{B_{1,m}\}$, $\{B_{2,m}\}$, $\{B_{3,m}\}$) zwischen mehreren Teilnehmern ($T_0$, ..., $T_K$) eines Uebertragungssystems, wobei jeder der verschiedenen Datenströme ($\{B_{1,m}\}$, $\{B_{2,m}\}$, $\{B_{3,m}\}$) mit der gleichen Spreizsequenz (s[.]) zu einem entsprechenden DSSS-Signal (DSSS = Direct Sequence Spread Spectrum) gespreizt wird und die verschiedenen DSSS-Signale ($\{B_{1,m}s[.]\}$, $\{B_{2,m}s[.]\}$, $\{B_{3,m}s[.]\}$) bei der Uebertragung zu einem einzigen Empfangssignal überlagert werden, dadurch gekennzeichnet, dass zum Detektieren eines der verschiedenen Datenströme ($\{B_{1,m}\}$, $\{B_{2,m}\}$, $\{B_{3,m}\}$) in einem Empfänger das Empfangssignal in einem bezüglich der gemeinsamen Spreizsequenz (s[.]) inversen Filter (9, 21) gefiltert wird und dass die Ueberlagerung so erfolgt, dass die zu verschiedenen Datenströmen ($\{B_{1,m}\}$, $\{B_{2,m}\}$, $\{B_{3,m}\}$) gehörenden Spreizsequenzintervalle ($B_{1,m}S_i$, $B_{2,m}S_i$, ...) um einen vorgegebenen minimalen Wert (Delta_T) zeitlich gegeneinander verschoben sind.

2. Mehrfachzugriffsverfahren nach Anspruch 1, dadurch gekennzeichnet, dass die zeitliche Verschiebung (Delta_T) der zu verschiedenen Datenströmen ($\{B_{1,m}\}$, $\{B_{2,m}\}$, $\{B_{3,m}\}$) gehörenden Spreizsequenzintervalle ($B_{1,m}S_i$, $B_{2,m}S_i$, ...) grösser ist als eine Chipdauer ($T_0$) plus die Dauer der Stossantwort eines für die Uebertragung des entsprechenden DSSS-Signals verwendeten Kanals ($h_k(t)$).

3. Mehrfachzugriffsverfahren nach Anspruch 1 oder 2, dadurch gekennzeichnet, dass die zeitliche Verschiebung (Delta_T) gegenüber benachbarten Spreizsequenzintervallen ($B_{1,m}S_i$, $B_{2,m}S_i$, ...) für alle zu verschiedenen Datenströmen ($\{B_{1,m}\}$, $\{B_{2,m}\}$, $\{B_{3,m}\}$) gehörenden Spreizsequenzintervalle ($B_{1,m}S_i$, $B_{2,m}S_i$, ...) im wesentlichen gleich gross ist.

4. Mehrfachzugriffsverfahren nach einem der Ansprüche 1 bis 3, dadurch gekennzeichnet, dass das Inversfilter (9, 21) so gewählt ist, dass es bei Anregung durch die vorgegebene Pulssequenz (s[.]) als solche annähernd mit einer Kronecker-Delta-Sequenz ($\delta[k]$) als Ausgangssequenz antwortet.

5. Mehrfachzugriffsverfahren nach einem der Ansprüche 1 bis 4, dadurch gekennzeichnet, dass die Koeffizienten v[k] des zur Spreizsequenz s[.] gehörenden inversen Filters (9, 21) im Sinn einer der drei folgenden Approximationen gewählt sind, nämlich entweder
   a) Abgeschnittenes Inversfilter, gemäss der Formel

$$v[k] = \frac{1}{2\pi} \int_{-\pi}^{\pi} \frac{d\Omega}{\sum_{i=0}^{L-1} s[i]e^{j(i-k)\Omega}} \quad ,$$

   $k = -M_1 \ldots L+M_2$,
       $v[k] = 0$ , für $k < -M_1$ und $k > L+M_2$ ; oder
   b) Kleinste Fehlerquadrate,
   wobei die Koeffizienten v[k], $k = -M_1 \ldots L+M_2$, so bestimmt sind, dass bei Anregung durch die vorgegebene Pulssequenz (s[.]) als solche das approximierte Inversfilter mit einer Ausgangssequenz antwortet, die die Kronecker-Delta-Sequenz ($\delta[k]$) im Sinn der kleinsten Fehlerquadrate annähert; oder
   c) Maximales POP-Verhältnis,
   wobei das approximierte Inversfilter (9, 21) mit einer vorgegebenen Zahl von Koeffizienten v[k], $k = -M_1 \ldots L+M_2$, antwortet bei Anregung durch die vorgegebene Pulssequenz (s[.]) als solche mit einer Ausgangssequenz, die die Kronecker-Delta-Sequenz ($\delta[k]$) im Sinn eines maximalen Peak/Off Peak Verhältnisses annähert.

6. Mehrfachzugriffsverfahren nach einem der Ansprüche 1 bis 5, dadurch gekennzeichnet, dass die Spreizsequenz s[.] so festgelegt ist, dass der Prozessgewinn G, definiert durch die Inverse der Energie des zugehörigen Inversfilters:

$$G = \cfrac{1}{\displaystyle\sum_{i=-\infty}^{+\infty} v_i{}^2}$$

in bezug auf möglichst viele, insbesondere alle Spreizsequenzen gegebener Länge L maximal ist.

7. Mehrfachzugriffsverfahren nach einem der Ansprüche 1 bis 6, dadurch gekennzeichnet, dass für die Einhaltung der minimalen zeitlichen Abstände über einen separaten Kanal Synchronisationssignale an die Teilnehmer ($T_1$, ..., $T_K$) des Uebertragungssystems übertragen werden.

8. Mobilfunksystem zur Durchführung des Mehrfachzugriffsverfahrens gemäss Anspruch 1, umfassend mindestens eine Basisstation ($T_0$) und mehrere Teilnehmerstationen ($T_1$, ..., $T_K$) mit Sender/Empfängerschaltanordnungen mit je einer Schaltung (3.1, ..., 3.K, 14.1, ..., 14.K), um jeden der verschiedenen Datenströme ({$B_{1,m}$}, {$B_{2,m}$}, {$B_{3,m}$}) mit der gleichen Spreizsequenz (s[.]) zu einem entsprechenden DSSS-Signal zu spreizen und einer Schaltung (15) in der Basisstation ($T_0$), um die verschiedenen DSSS-Signale ({$B_{1,m}$s[.]}, {$B_{2,m}$s[.]}, {$B_{3,m}$s[.]}) für die Uebertragung zu einem einzigen Empfangssignal zu überlagern, wobei zum Detektieren eines der verschiedenen Datenströme ({$B_{1,m}$}, {$B_{2,m}$}, {$B_{3,m}$}) die Empfängerschaltanordnung ein Inversfilter (9, 21) aufweist, um das Empfangssignal bezüglich der gemeinsamen Spreizsequenz invers zu filtern, und wobei Verzögerungsglieder (2.1, ..., 2.K, 13.1, ..., 13.K) vorgesehen sind, die die zu verschiedenen Datenströmen ({$B_{1,m}$}, {$B_{2,m}$}, {$B_{3,m}$}) gehörenden Spreizsequenzintervalle ($B_{1,m}S_i$, $B_{2,m}S_i$, ...) um einen vorgegebenen minimalen Wert (Delta_T) zeitlich gegeneinander verschieben.

9. Mobilfunksystem nach Anspruch 8, dadurch gekennzeichnet, dass die Teilnehmerstationen ($T_1$, ..., $T_K$) und die Basisstation ($T_0$) Mittel (18) zum Modulieren einer Trägerschwingung gemäss einem gegebenen DSSS-Signal aufweisen, wobei die Trägerschwingung für alle Teilnehmerstationen ($T_1$, ..., $T_K$) und die Basisstation ($T_0$) dieselbe ist.

## Claims

1. Multiple-access process for the simultaneous exchange of several data streams ({$B_{1,m}$}, {$B_{2,m}$}, {$B_{3,m}$}) between several subscribers ($T_0$, ..., $T_K$) of a transmission system, each of the various data streams ({$B_{1,m}$}, {$B_{2,m}$}, {$B_{3,m}$}) being spread with the same spread sequence (s[.]) to form a corresponding DSSS signal (DSSS = Direct Sequence Spread Spectrum) and the various DSSS signals ({$B_{1,m}$s[.]}, {$B_{2,m}$s[.]}, {$B_{3,m}$s[.]}) being superimposed during transmission to form a single received signal, characterised in that, in order to detect one of the various data streams ({$B_{1,m}$}, {$B_{2,m}$}, {$B_{3,m}$}) in a receiver, the received signal is filtered in a filter (9, 21) which is reversed in relation to the common spread sequence (s[.]), and in that the superimposition is effected in such a manner that the spread sequence intervals ($B_{1,m}S_i$, $B_{2,m}S_i$, ...) belonging to various data streams ({$B_{1,m}$}, {$B_{2,m}$}, {$B_{3,m}$}) are staggered relative to one another in time by a predetermined minimum value (Delta_T).

2. Multiple-access process according to Claim 1, characterised in that the time stagger (Delta_T) of the spread sequence intervals ($B_{1,m}S_i$, $B_{2,m}S_i$, ...) belonging to various data streams ({$B_{1,m}$}, {$B_{2,m}$}, {$B_{3,m}$}) is greater than a chip time ($T_0$) plus the duration of the impulse response of a channel ($h_k(t)$) used for the transmission of the corresponding DSSS signal.

3. Multiple-access process according to Claim 1 or 2, characterised in that the time stagger (Delta_T) with respect to adjacent spread sequence intervals ($B_{1,m}S_i$, $B_{2,m}S_i$, ...) is of substantially the same size for all spread sequence intervals ($B_{1,m}S_i$, $B_{2,m}S_i$, ...) belonging to various data streams ({$B_{1,m}$}, {$B_{2,m}$}, {$B_{3,m}$}).

4. Multiple-access process according to any one of Claims 1 to 3, characterised in that the reversed filter (9, 21) is so chosen that, when it is excited by the predetermined pulse sequence (s[.]) as such, it responds approximately with a Kronecker-Delta sequence ($\delta[k]$) as starting sequence.

5. Multiple-access process according to any one of Claims 1 to 4, characterised in that the coefficients v[k] of the reversed filter (9, 21) belonging to the spread sequence (s[.]) are chosen in accordance with one of the following three approximations, namely either

a) cut-off reversed filter, according to the formula

$$v[k] = \frac{1}{2\pi} \int_{-\pi}^{\pi} \frac{d\Omega}{\sum_{i=0}^{L-1} s[i]e^{j(i-k)\Omega}} \quad ,$$

$k = -M_1 \ldots L+M_2$,

$v[k] = 0$ , for $k < -M_1$ and $k > L+M_2$ ; or

b) smallest error squares,

the coefficients v[k], $k = -M_1 \ldots L+M_2$ being so determined that, when it is excited by the predetermined pulse sequence (s[.]) as such, the approximated reversed filter responds with a starting sequence which approximates the Kronecker-Delta sequence ($\delta[k]$) in accordance with the smallest error squares; or

c) maximum POP ratio,

the approximated reversed filter (9, 21) with a predetermined number of coefficients v[k], $k = -M_1 \ldots L+M_2$ responding when excited by the predetermined pulse sequence (s[.]) as such with a starting sequence which approximates the Kronecker-Delta sequence ($\delta[k]$) in accordance with a maximum peak/off-peak ratio.

6. Multiple-access process according to any one of Claims 1 to 5, characterised in that the spread sequence (s[.]) is so determined that the process gain G, defined by the inverse of the energy of the associated reversed filter:

$$G = \frac{1}{\sum_{i=-\infty}^{+\infty} v_i^2}$$

is at a maximum in relation to as many as possible, especially all, of the spread sequences of a given length L.

7. Multiple-access process according to any one of Claims 1 to 6, characterised in that, in order to observe the minimum time intervals, synchronisation signals are transmitted to the subscribers ($T_1, \ldots, T_K$) of the transmissionsystem <u>via</u> a separate channel.

8. Mobile radiocommunication system for implementing the multiple-access process according to Claim 1, comprising at least one base station ($T_0$) and several subscriber stations ($T_1, \ldots, T_K$) having transmitter/receiver circuit arrangements each of which has a circuit (3.1, ..., 3.K, 14.1, ..., 14.K) in order to spread each of the various data streams ($\{B_{1,m}\}, \{B_{2,m}\}, \{B_{3,m}\}$) with the same spread sequence (s[.]) to form a corresponding DSSS signal, and a circuit (15) in the base station ($T_0$) in order to superimpose the various DSSS signals ($\{B_{1,m}s[.]\}, \{B_{2,m}s[.]\}, \{B_{3,m}s[.]\}$) for the transmission to form a single received signal, wherein, in order to detect one of the various data streams ($\{B_{1,m}\}, \{B_{2,m}\}, \{B_{3,m}\}$), the receiver circuit arrangement has a reversed filter (9, 21) for filtering the received signal in reversed manner in relation to the common spread sequence, and wherein delay elements (2.1, ..., 2.K, 13.1, ..., 13.K) are provided which stagger relative to one another in time, by a predetermined minimum value (Delta_T), the spread sequence intervals ($B_{1,m}S_i, B_{2,m}S_i, \ldots$) belonging to various data streams ($\{B_{1,m}\}, \{B_{2,m}\}, \{B_{3,m}\}$).

9. Mobile radiocommunication system according to Claim 8, characterised in that the subscriber stations ($T_1, \ldots, T_K$) and the base station ($T_0$) have means (18) for modulating a carrier oscillation in accordance with a given DSSS signal, the carrier oscillation being the same for all subscriber stations ($T_1$, ..., $T_K$) and the base station ($T_0$).

## Revendications

1. Méthode d'accès multiple pour l'échange simultané de plusieurs flux de données ($\{B_{1,m}\}$, $\{B_{2,m}\}$, $\{B_{3,m}\}$) entre plusieurs abonnés ($T_0$, ..., $T_K$) d'un système de transmission, chacun des flux de données ($\{B_{1,m}\}$, $\{B_{2,m}\}$, $\{B_{3,m}\}$) étant écarté avec la même séquence d'écartement (s[.]) par rapport à un signal DSSS (DSSS = Direct Sequence Spread Spectrum) approprié et les divers signaux DSSS ($\{B_{1,m}s[.]\}$, $\{B_{2,m}s[.]\}$, $\{B_{3,m}s[.]\}$) étant superposés lors de la transmission en un signal de transmission unique, caractérisée en ce que, pour détecter l'un des divers flux de données ($\{B_{1,m}\}$, $\{B_{2,m}\}$, $\{B_{3,m}\}$) dans un récepteur, le signal de réception est filtré dans un filtre (9, 21) inverse par rapport à la séquence d'écartement (s[.]) commune et la superposition se fait de telle façon que les intervalles de séquence d'écartement ($B_{1,m}S_i$, $B_{2,m}S_i$,...) appartenant aux divers flux de données ($\{B_{1,m}\}$, $\{B_{2,m}\}$, $\{B_{3,m}\}$) sont décalés dans le temps les uns par rapport aux autres d'une valeur (Delta_T) minimale prédéfinie.

2. Méthode d'accès multiple selon la revendication 1, caractérisée en ce que le décalage dans le temps (Delta_T) des intervalles de séquence d'écartement ($B_{1,m}S_i$, $B_{2,m}S_i$, ...) appartenant à divers flux de données ($\{B_{1,m}\}$, $\{B_{2,m}\}$, $\{B_{3,m}\}$) est supérieur à une durée de puce ($T_0$) plus la durée de la réponse impulsionnelle d'un canal ($h_k(t)$) utilisé pour la transmission du signal DSSS correspondant.

3. Méthode d'accès multiple selon la revendication 1 ou 2, caractérisée en ce que le décalage dans le temps (Delta_T) par rapport à des intervalles de séquence d'écartement ($B_{1,m}S_i$, $B_{2,m}S_i$, ...) voisins est sensiblement égal pour tous les intervalles de séquence d'écartement ($B_{1,m}Si$, $B_{2,m}S_i$, ...) appartenant à divers flux de données ($\{B_{1,m}\}$, $\{B_{2,m}\}$, $\{B_{3,m}\}$).

4. Méthode d'accès multiple selon l'une quelconque des revendications 1 à 3, caractérisée en ce que le filtre inverse (9, 21) est choisi de telle façon que, en cas d'excitation par la séquence d'impulsion (s[.]) prédéfinie en tant que telle, il répond approximativement avec une séquence delta Kronecker ($\delta[k]$) comme séquence initiale.

5. Méthode d'accès multiple selon l'une quelconque des revendications 1 à 4, caractérisée en ce que les coefficients v[k] du filtre inverse (9, 21) faisant partie de la séquence d'écartement s[.] sont choisis dans le sens de l'une des trois approximations suivantes, à savoir soit
   a) filtre inverse tronqué, selon la formule

$$v[k] = \frac{1}{2\pi} \int_{-\pi}^{\pi} \frac{d\Omega}{\sum_{i=0}^{L-1} s[i]e^{j(i-k)\Omega}} \,,$$

$k = -M_1 \ldots L+M_2$
   $v[k] = 0$ , pour $k < -M_1$ et $k > L+M_2$ ;
   b) moindres carrés
      les coefficients v[k], $k = -M_1 \ldots L+M_2$, étant définis de telle façon que, en cas d'excitation par la séquence d'impulsion (s[.]) prédéfinie en tant que telle, le filtre inverse approché par approximation répond avec une séquence initiale qui approche la séquence Delta Kronecker ($\delta[k]$) dans le sens des moindres carrés ; ou
   c) rapport POP maximum
      le filtre inverse (9, 21) approché par approximation répondant avec un nombre prédéfini de coefficients v[k], $k = -M_1 \ldots L+M_2$, en cas d'excitation par la séquence d'impulsion (s[.]) prédéfinie en tant que telle avec une séquence initiale qui approche la séquence delta Kronecker ($\delta[k]$ dans le sens d'un rapport Peak/Off Peak maximum.

6. Méthode d'accès multiple selon l'une quelconque des revendications 1 à 5, caractérisée en ce que la séquence d'écartement s[.] est fixée de telle façon que le gain de processus G, défini par l'inverse de l'énergie du filtre inverse associé :

$$G = \frac{1}{\sum\limits_{i=-\infty}^{+\infty} v_i^2}$$

est maximum par rapport au plus grand nombre possible de séquences, notamment toutes les séquences d'écartement de longueur L donnée ;

7. Méthode d'accès multiple selon l'une quelconque des revendications 1 à 6, caractérisée en ce que, pour respecter les intervalles de temps minimum, des signaux de synchronisation sont transmis par un canal séparé aux abonnés ($T_1$, $T_K$) du système de transmission.

8. Système radiotéléphonique mobile pour l'application de la méthode d'accès multiple selon la revendication 1, comprenant au moins une station de base ($T_0$) et plusieurs stations d'abonné ($T_1$, ..., $T_K$) avec dispositifs de couplage émetteur/récepteur comprenant chacun un circuit (3.1, ..., 3.K, 14.1, ..., 14.K), afin d'écarter chacun des divers flux de données ({$B_{1,m}$}, {$B_{2,m}$}, {$B_{3,m}$}) avec la même séquence d'écartement (s[.]) par rapport à un signal DSSS correspondant et un circuit (15) dans la station de base ($T_0$), pour superposer les divers signaux DSSS ({$B_{1,m}$s[.]}, {$B_{2,m}$s[.]}, {$B_{3,m}$s[.]}) pour la transmission à un seul signal de réception, le dispositif de couplage émetteur présentant un filtre inverse (9, 21) pour détecter l'un des divers flux de données ({$B_{1,m}$}, {$B_{2,m}$}, {$B_{3,m}$}), afin de filtrer en sens inverse le signal de réception par rapport à la séquence d'écartement commune, et des éléments de retard (2.1, ..., 2K, 13.1, ..., 13K) étant prévus, qui décalent dans le temps les intervalles de séquences d'écartement ($B_{1,m}S_i$, $B_{2,m}S_i$,...) appartenant aux divers flux de données ({$B_{1,m}$}, {$B_{2,m}$}, {$B_{3,m}$}) les uns par rapport aux autres d'une valeur (Delta_T) minimale prédéfinie.

9. Système radiotéléphonique mobile selon la revendication 8, caractérisé en ce que les stations d'abonnés ($T_1$, ..., $T_K$) et la station de base ($T_0$) présentent des moyens (18) pour moduler une oscillation porteuse selon un signal DSSS donné, l'oscillation porteuse étant la même pour toutes les stations d'abonné ($T_1$, ..., $T_K$) et la station de base ($T_0$).

# Fig. 1

| $B_{1,m} S_i$ | $B_{1,m+1} S_i$ | $B_{1,m+2} S_i$ |
|---|---|---|

T        2T

$\Delta T$

| $B_{2,m} S_i$ | $B_{2,m+1} S_i$ | $B_{2,m+2} S_i$ |
|---|---|---|

T        2T

$2\Delta T$

| $B_{3,m} S_i$ | $B_{3,m+1} S_i$ | |
|---|---|---|

T        2T

# Fig. 2

Y[k]

$\Delta T$

$I_1$

$B_{1,m}h_1$

$I_2$

$B_{2,m}h_2$

$I_3$

$B_{3,m}h_3$

$I_4$

$B_{1,m+1}h$

$I_5$

$B_{2,m+1}h_2$

$I_6$

$B_{3,m+1}h_3$

$I_7$

$B_{1,m+2}h_1$

13

# Fig. 3a

$$T_1$$

$B_{1,m}$ → 1.1 → 2.1 → 3.1 → 4.1 → 5.1 → 6.1 →

$$T_2$$

$B_{2,m}$ → 1.2 → 2.2 → 3.2 → 4.2 → 5.2 → 6.2 →

$$T_K$$

$B_{K,m}$ → 1.K → 2.K → 3.K → 4.K → 5.K → 6.K →

$$T_0$$

→ $h_1$

→ $h_2$  Σ  $W(t)$  → 7 → 8 → Tc → 9 → 10 → 11.1 → $\hat{B}_{1,m}$

→ $h_K$  → 11.2 → $\hat{B}_{2,m}$

→ 11.K → $\hat{B}_{3,m}$

# Fig. 3b